# EUROPEAN PATENT SPECIFICATION

(11) **EP 2 375 703 B1**
(45) Date of publication and mention of the grant of the patent: **30.07.2014**
(21) Application number: 10159620.3
(22) Date of filing: 12.04.2010
(51) Int. Cl.: H04M 1/02

(54) **Handheld electronic communication device including touch-sensitive display**
Tragbare elektronische Kommunikationsvorrichtung mit berührungsempfindlicher Anzeige
Dispositif de communication électronique portable incluant un écran tactile

(43) Date of publication of application: 12.10.2011
(73) Proprietor: BlackBerry Limited, Waterloo, ON N2K 0A7 (CA)
(72) Inventor: Griffin, Jason Tyler, Waterloo Ontario N2L 3W8 (CA); Wood, Todd Andrew, Waterloo Ontario N2L 3W8 (CA)
(74) Representative: MERH-IP Matias Erny Reichl Hoffmann

(56) References cited:
- US-A1- 2004 229 662
- US-A1- 2008 299 804
- US-A1- 2009 323 278

## Description

### FIELD OF TECHNOLOGY

The present disclosure relates to handheld electronic communication devices including a touch-sensitive display.

### BACKGROUND

Electronic devices, including handheld electronic communication devices, have gained widespread use and may provide a variety of functions including, for example, telephonic, electronic text messaging and other personal information manager (PIM) application functions. Handheld electronic communication devices can include several types of devices including mobile stations such as simple cellular phones and smart phones.

Devices such as smart phones are generally intended for handheld use and ease of portability. Smaller devices are generally desirable for portability. Touch-sensitive devices constructed of a display, such as a liquid crystal display (LCD), with a touch-sensitive overlay are useful on such handheld devices as such handheld devices are small and are therefore limited in space available for user input and output devices. Further, the screen content on the touch-sensitive devices can be modified depending on the functions and operations being performed.

US 2008/0299804 discloses a mobile electronic device that includes two planar panels that are suspended form one another and are connected together by a hinge. The two panels can be rotated relative to one another in a plane in which both panels are arranged between a retracted position in which the two panels substantially overlap one another to an extended position in which the panel do not completely overlap one another.

US 2004/0229662 discloses a mobile communication device that includes a display assembly that is connected to a housing of the mobile communication device by a pivoting mechanism. The pivoting assembly allows the display assembly to rotate between a retracted position where the display assembly is retracted within a cavity formed in the housing, and an extended position where the display assembly is extended from the housing.

US 2009/0323278 discloses a portable electronic device that includes a main body, a sliding cover mounted on the main body, a flipping cover rotatably mounted on one end of the main body, and a transmission mechanism connecting the flipping cover to the sliding cover such that when the flipping cover rotates relative to the main body, the sliding cover slides relative to the main body.

### SUMMARY

According to one aspect, a handheld electronic communication device is provided. The handheld electronic communication device includes a body that has an input device, and a display assembly including a display, the display assembly connected to the body by a rack and pinion mechanism and rotatable relative to the body, between a first position in which a first portion of the display is covered by the body and a second portion of the display extends from the body, and a second position in which the display is displaced generally linearly relative to the first position such that the first portion and the second portion of the display are exposed.

According to another aspect, a method of controlling a handheld electronic communication device is provided. The handheld electronic communication device includes a body that has an input device, and a display assembly including a touch-sensitive display. The display assembly is connected to the body by a rack and pinion mechanism and rotatable relative to the body, between a first position in which a first portion of the touch-sensitive display is covered by the body and a second portion of the touch-sensitive display extends from the body, and a second position in which the display is displaced generally linearly relative to the first position such that the first portion and the second portion of the touch-sensitive display are exposed. The method includes activating touch-sensing utilizing the touch-sensitive display to detect a touch thereon when the display assembly is moved from the first position to the second position, and deactivating the touch-sensing when the display assembly is moved from the second position to the first position.

### BRIEF DESCRIPTION OF THE DRAWINGS

Embodiments of the present disclosure will now be described, by way of example only, with reference to the attached Figures, wherein:
FIG. 1 is a simplified block diagram of components including internal components of a handheld electronic communication device according to an example embodiment;
FIG. 2 is a perspective view of an example of a handheld electronic communication device including a display assembly in a first position;
FIG. 3 is a perspective view of the example handheld electronic communication device of FIG. 2, with the display assembly in a second position;
FIG. 4 is a perspective view of the example handheld electronic communication device of FIG. 2, with the display assembly in a third position, intermediate the first position and the second position;
FIG. 5 is a perspective view of a body of the example handheld electronic communication device of FIG. 2, without the display assembly;
FIG. 6 is a perspective view of the example handheld electronic communication device of FIG. 2 with a portion of the back removed to show hidden detail;
FIG. 7 is a perspective view of the display assembly of the example handheld electronic communication device of FIG. 2;
FIG. 8 is an alternative perspective view of the display assembly of the example handheld electronic communication device of FIG. 2;
FIG. 9 is a front view of the example handheld electronic communication device of FIG. 2 in the first position, showing hidden detail in ghost outline;
FIG. 10 is a front view of the example handheld electronic communication device of FIG. 2 in the second position, showing hidden detail in ghost outline;
FIG. 11 is a front view of the example handheld electronic communication device of FIG. 2 in the third position, showing hidden detail in ghost outline;
FIG. 12A to 12C shows views of the portable electronic communication device with the display assembly between a first position and a third position;
FIG 13 is a flowchart illustrating a method of controlling a handheld electronic communication device; and
FIG. 14 is a perspective view of an alternative example of a handheld electronic communication device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein However, it will be understood by those of ordinary skill in the art that the example embodiments described herein may be practiced without these specific details In other instances, well-known methods, procedures and components have not been described in detail so as not to obscure the example embodiments described herein. Also, the description is not to be considered as limited to the scope of the example embodiments described herein.

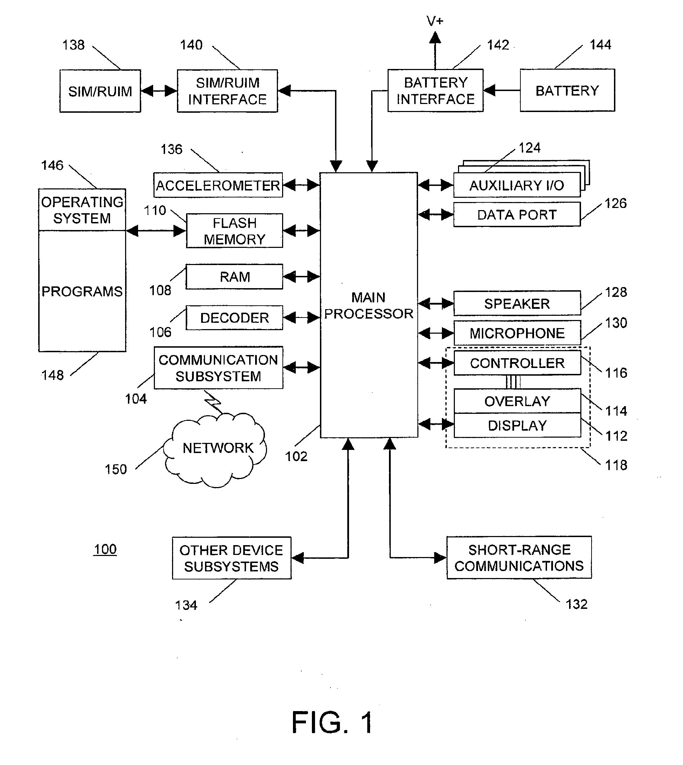

Referring first to FIG 1, a block diagram of components of the handheld electronic communication device 100 is shown The handheld electronic communication device 100 includes multiple components such as a processor 102 that controls the operations of the handheld electronic communication device 100. Communication functions, including data and voice communications, are performed through a communication subsystem 104. Data received by the handheld electronic communication device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The handheld electronic communication device 100 is a battery-powered device and includes a battery interface 142 for receiving one or more rechargeable batteries 144.

The processor 102 also interacts with additional subsystems such as a Random Access Memory (RAM) 108, a flash memory 110, a display 112 with a touch-sensitive overlay 114 connected to an electronic controller 116 that together comprise a touch-sensitive display 118, an auxiliary input/output (I/O) subsystem 124, a data port 126, a speaker 128, a microphone 130, short-range communications 132 and other device subsystems 134 User-interaction with the graphical user interface is performed through the touch-sensitive overlay 114. The processor 102 interacts with the touch-sensitive overlay 114 via the electronic controller 116. Information, such as text, characters, symbols, images, icons, and other features that may be displayed or rendered on a handheld electronic communication device, are displayed on the touch-sensitive display 118 via the processor 102. The processor 102 may also interact with an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces. Although the touch-sensitive display 118 is described as comprising a display 112 and an overlay 114, the touch-sensing components may overlay the display 112 or, alternatively, may be integrated into the display 112.

To identify a subscriber for network access according to the present embodiment, the handheld electronic communication device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into the flash memory 110.

The handheld electronic communication device 100 also includes an operating system 146 and software components 148 that are executed by the processor 102 and are typically stored in a persistent store such as flash memory 110. Additional applications may be loaded onto the handheld electronic communication device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the handheld electronic communication device 100 is similar. The speaker 128 outputs audible information converted from electrical signals, and the microphone 130 converts audible information into electrical signals for processing.

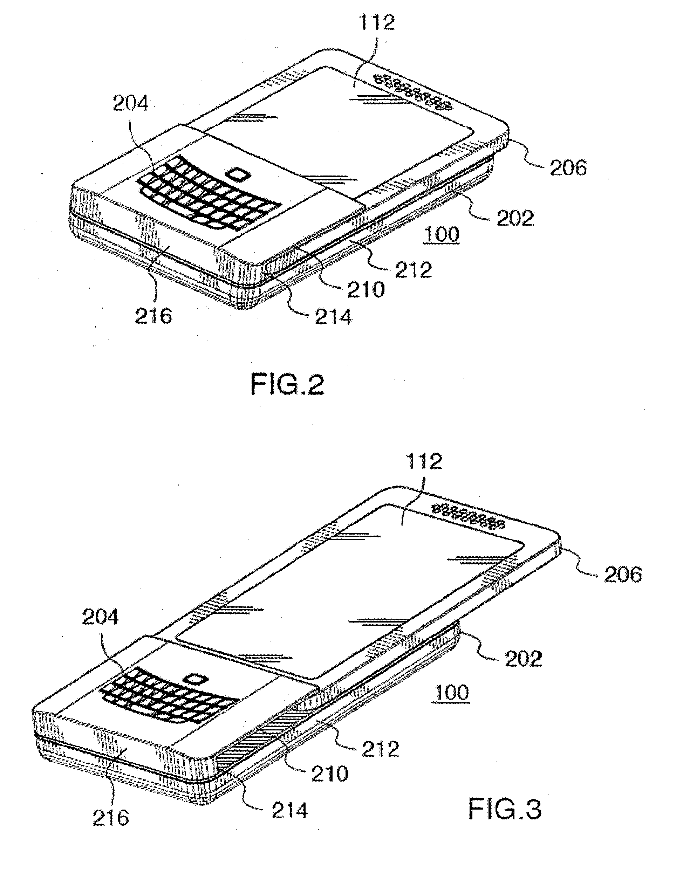

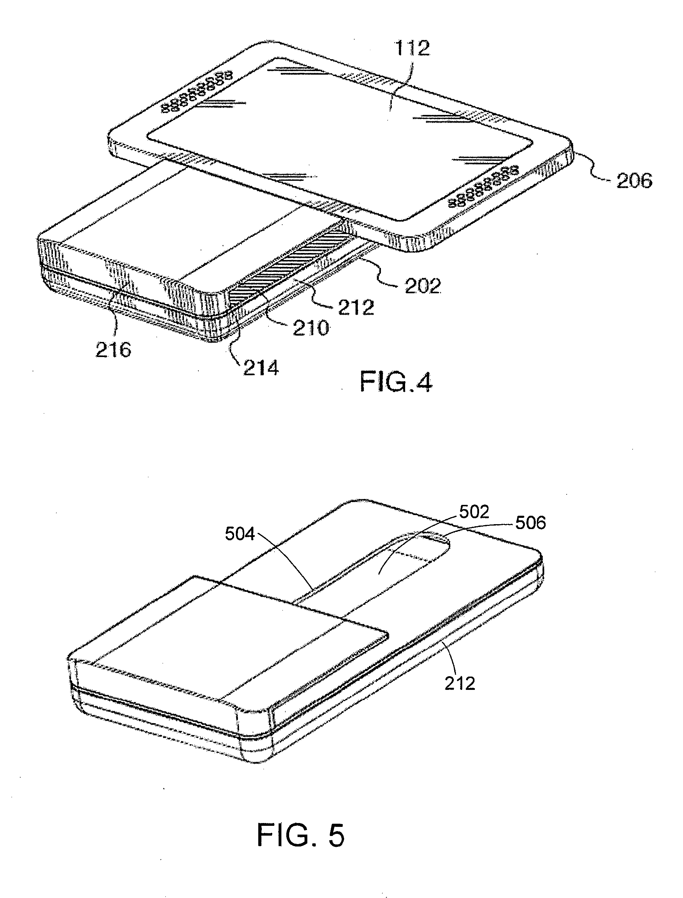

Referring to FIG. 2 and FIG. 3, perspective views of an example of the handheld electronic communication device 100 is shown The handheld electronic communication device 100 generally includes a body 202 that has an input device 204, and a display assembly 206 that includes a display 112. The display assembly 206 is connected to the body 202 and moveable relative to the body 202, between a first position shown in FIG. 2 in which a first portion of the display 112 is covered by the body 202 and a second portion of the display 112 extends from the body 202, and a second position shown in FIG. 3 in which the first portion and the second portion of the display 112 are exposed. The display 112 is in a portrait orientation relative to the front 210 of the body 202 in that the width of the display in the portrait orientation is less than the length of the display 112. The display assembly 206 is also moveable into a third position that is intermediate the first position and the second position and is shown in FIG. 4. When the display assembly 206 is in the third position, the first and second portion of the display 112 are exposed and the display is in a landscape orientation The display assembly 206 is rotated into the third position, from either the first position or the second position. In the landscape orientation, the display is rotated such that the width of the display 112 is greater than the length.

The body 202 includes a back 212 and a front 210 spaced from the back 212 by a flange 214 that extends between and connects the back 212 and the front 210. The flange 214 is unitary with the front 210 and is connected to the back 212 at a closed end 216 of the body 202. The flange 214 is suitably sized to provide a space between the front 210 and the back 212 in which the display assembly 206 is movable into and out of.

The front 210 of the body 202 extends generally parallel to the back 212, and the front 210 includes the input device 204, which may be, for example, a keyboard, as shown in FIG. 2, FIG 3, and FIG. 4, Alternatively, the input device 204 may be a keypad, a touch-sensitive pad, or trackpad, a touch-sensitive display, or any other suitable device for input.. The input device 204 is exposed for use in FIG 2, FIG 3, and FIG. 4.

The front 210 extends less than half the distance from the flange 214 as compared to the distance that the back 212 extends from the flange 214 and the front 210 and back 212 are connected by the flange 214 at the closed end 216 of the body. In the present example, the front 210, the flange 214 and the back 212 form a pocket with open sides to receive the display assembly 206. Alternatively, one side of the pocket may be closed by, for example, a side flange. In still another alternative, the side of the pocket from which the display assembly 206 enters and exits the pocket, may include, for example, a door that is biased into the closed position and opens when the display assembly is moved out of or into the first position.

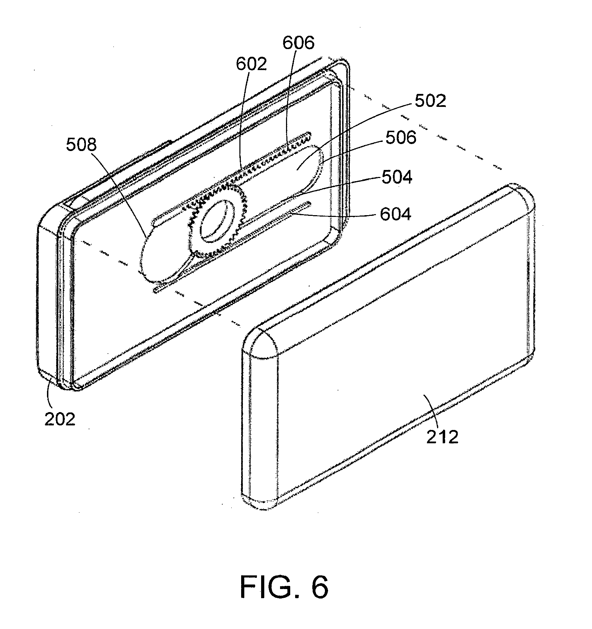

Referring now to FIG. 5, the back 212 of the body 202 includes a slot 502 that includes sides 504 that extend generally parallel with the sides of the back 212. The slot 502 has a semicircular 506 end with a diameter that is about equal to the shortest distance between the sides 504. Thus, the sides 504 extend generally tangentially from the semicircular end 506. The opposite end of the slot 502 is a larger semicircular end 508 with a diameter that is greater than the diameter of the semicircular end 506. The larger semicircular end 508 is sized to receive a pinion through the slot 502 during assembly of the handheld electronic communication device 100. As shown in FIG. 6, a rack 602 extends parallel to and near one side 504 of the slot 502 and a guide 604 extends parallel to and near the other side 504 of the slot 502. The rack 602 includes teeth 606 to engage with teeth on a pinion, or generally round gear, that extends from the display assembly 206 and the guide 604 maintains the pinion in engagement with the rack 602. The rack and pinion may be constructed of any suitable material, such as, for example, polyacetal, nylon, ultra high molecular weight polyethylene, or metal, such as magnesium, steel, aluminum, or any other suitable material.

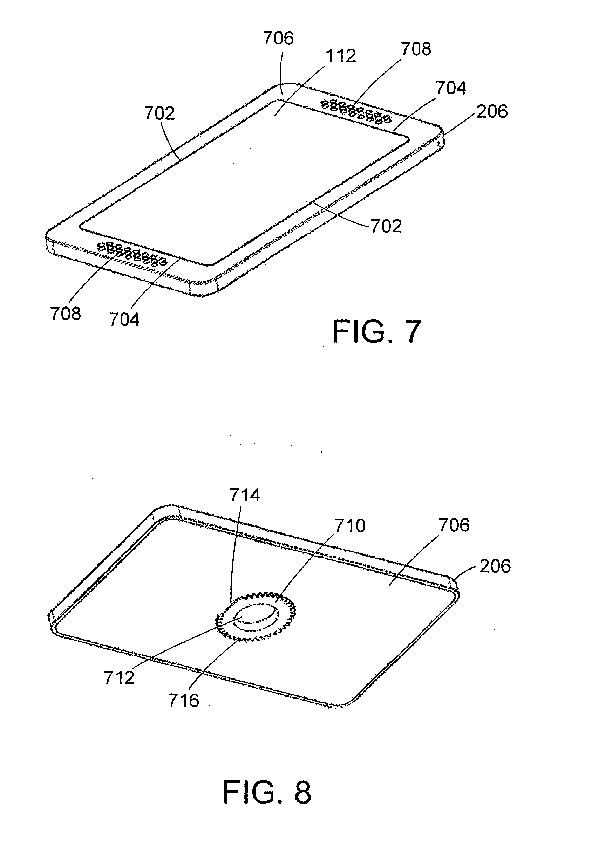

Referring now to FIG. 7, the display assembly 206 includes the display 112 which may be an LCD display. Optional components including a backlight may also be included The display 112 in the present example, is part of the touch-sensitive display 118, including the touch-sensitive overlay 114 to detect touches thereon. The display 112 is generally rectangular with opposing parallel long sides 702 and opposing parallel short sides 704. The display assembly 112 is housed in a display housing 706 that is also generally rectangular and, in the example shown, includes speakers 708 adjacent each short side 704 of the display 112.

Referring to FIG 8, a pinion 710, or generally round gear, extends from a backside of the display housing 706. The pinion 710 extends on a cylindrical spacer 712 that is smaller in diameter than the pinion 710 such that the pinion 710 is spaced from the backside of the display housing 706. Teeth 716 on the pinion 710 are sized and shaped to cooperate with the teeth 606 of the rack 602 at the back 212 of the body 202. The spacer 712 provides a passageway therethrough to facilitate connection of components of the display assembly 206 with components of the body 202. The spacer 712 and pinion 710 are rotatable relative to the display housing 706. The spacer 712 and pinion 710 may be integrally molded with the display housing 706 or may be attached to the display housing 706 by any other suitable means In the present example, the pinion 710 includes a stop 714 that is located adjacent the guide 604 when the display assembly 206 is in the third position, intermediate the first position and the second position. The stop 714 includes a portion of the pinion 710 absent teeth and a leading edge that 715 abuts and applies a force against the guide 604 when moving from the first position into the third position. A force is therefore applied to overcome the force of the edge 715 on the guide 604 to move the display assembly 206 into the third position Similarly, the edge 715 abuts guide 604 when moving from the third position into the third position. A Force is therefore applied to overcome the force of the edge 715 on the guide 604 to move the display assembly 206 out of the third position, toward the first position. The stop 714 facilitates positioning of the display assembly 206 in the third position as the stop 714 maintains the display assembly 206 in the third position until sufficient force is applied during rotation of the display assembly 206 to move the display assembly 206 out of the third position. The stop 714 also provides a "click" or tactile feedback to the user when the display assembly 206 is rotated into and out of the third position.

Optionally, detents may be provided, for example, adjacent the slot, to facilitate movement of the display assembly 206 into each of the first, second, and third positions or into any one or combination of these positions.

The body 202 and the display assembly 206 may both house components of the handheld electronic communication device 100, including the components described and shown in FIG. 1.

In the assembled state, the display assembly 26 is connected to the back 212 of the body 202 and rotates about the body 202 as the spacer 712 extends through the slot 502 and the teeth 716 of the pinion 710 engage with the teeth 606 of the rack 602. The rotation of the display assembly 206 relative to the body 202 is accompanied by a displacement or translation of the display assembly 206 relative to the body 202 as the display assembly moves along the slot 502 with rotation. The display assembly 206 therefore is displaced, relative to the body 202, along the slot 502 as the display assembly 206 rotates, relative to the body 202, along the rack 602.

As described above, the display assembly 206 is moveable relative to the body 202, between a first position shown in FIG. 2, the position shown in FIG. 4 and the position shown in FIG. 3. In the position shown in FIG. 2, the display assembly 206 is received in the pocket in the body 202, a first portion of the display 112 is covered by the body 202 and a second portion of the display 112 extends from the body 202. In the third position shown in FIG. 4, and intermediate the first position and the second position, the entire display 112 is exposed and the display 112 is in the landscape orientation such that the long sides 702 of the display 112 are generally parallel to the end 216 of the body 202. In the second position shown in FIG. 3, the entire display 112, including the first portion and the second portion of the display 112, is exposed and the display 112 is in the portrait orientation relative to the front 210 of the body 202 such that the short sides 704 of the display 112 are generally parallel to the end 216 of the body 202.

Referring again to FIG 2, FIG. 3 and FIG. 4, movement of the display assembly 206 relative to the body 202 will now be described. The display assembly 206 may be disposed in the pocket of the body 202 as shown in FIG. 2. In this orientation the second portion of the display 112, which is the portion shown in FIG. 2 that is exposed, may be utilized for displaying information. The first portion of the display 112 is covered by the input device 204 and is therefore not utilized for displaying information. The display assembly 206 may be moved relative to the body 202, from the first position to the third position and then to the second position or from the first position to the second position.

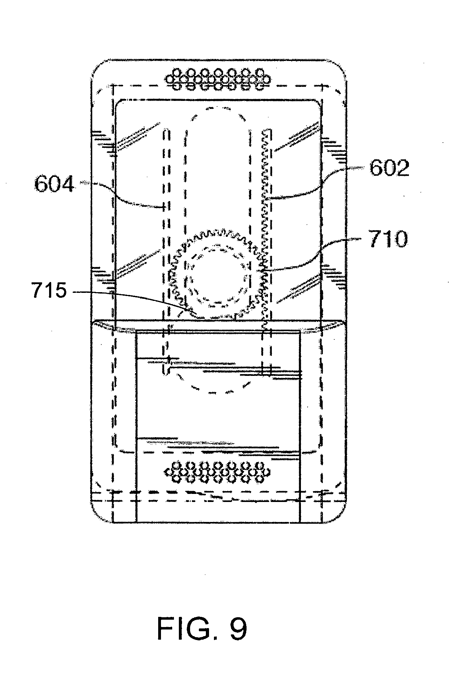

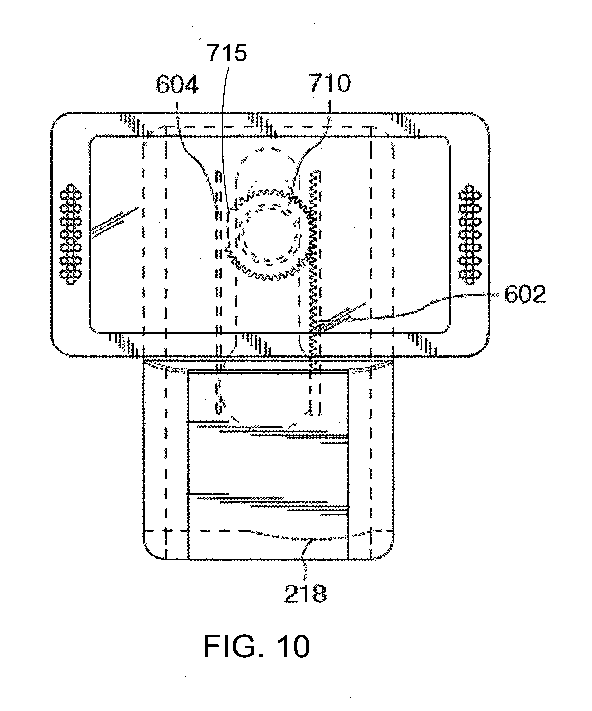

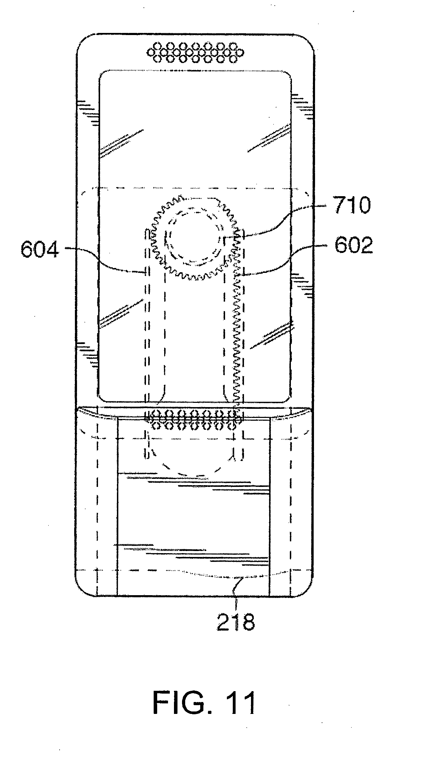

To move from the first position to the third position, the display assembly 206 is rotated out of the pocket, as the pinion 710 rotates along the rack 602 and the display assembly 206 is displaced, or translated, along the slot 502, from the position shown in FIG. 9 to the position shown in FIG. 10, such that the display 112 is generally transverse to the orientation of the display 112 in the first position. The entire display 112 may be utilized for displaying information in a landscape orientation when the display assembly 206 is in the third position. The accelerometer 136 may be disposed in the display assembly 206 to determine the orientation of the display assembly 206 and to display information in a corresponding orientation of the display 112. To move to the second position, the display assembly 206 is further rotated, and thus further translated along the slot 502, out of the third position such that the short sides 704 of the display 112 are generally parallel with the end 216 of the body 202. Thus, in the second position shown in FIG 11, the display 112 is displaced generally linearly along the slot 502, relative to the first position shown in FIG. 9. In the second position, shown in FIG. 11, the entire display 112 may be utilized for displaying information in a portrait orientation. Although described as a landscape orientation in FIG. 10 and a portrait orientation in FIG. 11, the handheld electronic communication device may be held in any suitable orientation and may depend on the use of the device when the display device is in the positions shown.

To return the display assembly 206 to the first position, the display assembly 206 is rotated in the reverse direction and thus displaced, or translated, in the reverse direction along the slot 502.

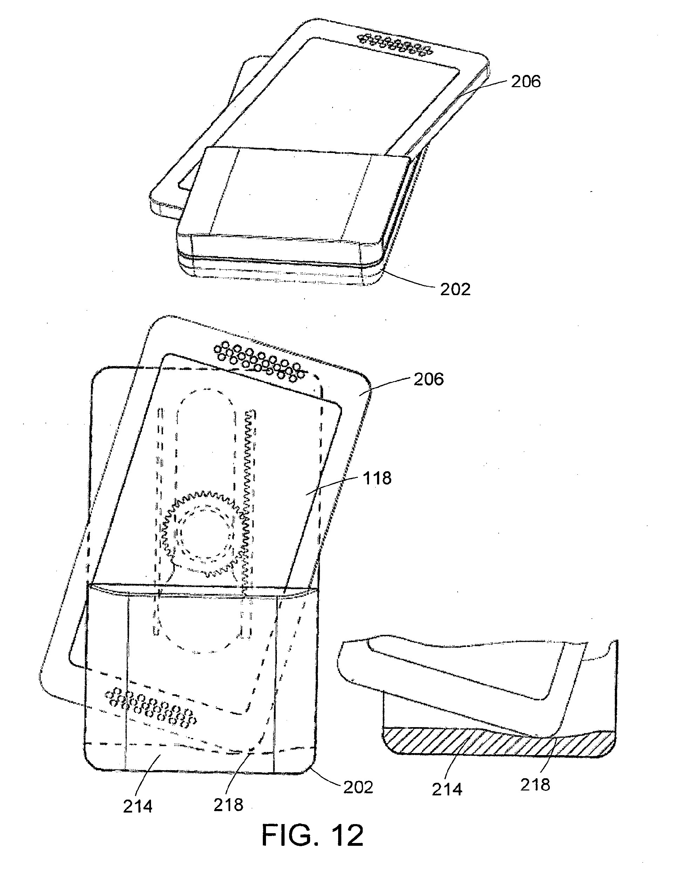

The flange 214 includes a semi-circular wall 218 on one side of the flange 214 inside the pocket. The semi-circular wall 218 provides a depressed portion of the flange 214 to facilitate movement of a corner of the display assembly 206 past the flange 214 during rotation and translation of the display assembly 206 out of the first position as shown in FIG. 12A, FIG. 12B, and FIG. 12C.

As indicated above, the display 112 is part of a touch-sensitive display 118. The touch-sensitive overlay 114 of the touch-sensitive display 118 may be selectively operable such that the touch-sensitive overlay 114 is activated or operable in at least one of the positions of the display assembly 206 and not activated or inoperable in at least one of the other positions of the display assembly 206. For example, the touch-sensitive overlay 114 may be inoperable when the display assembly 206 is in the first position. The touch-sensitive overlay may be operable when the display assembly 206 is in the second position. Many different devices may be utilized for detection of the position of the display assembly 206 relative to the body 202. For example, a Hall effect sensor may be utilized to detect a position or positions of the display assembly 206 relative to the body 202. According to another example, a mechanical switch or switches are utilized.

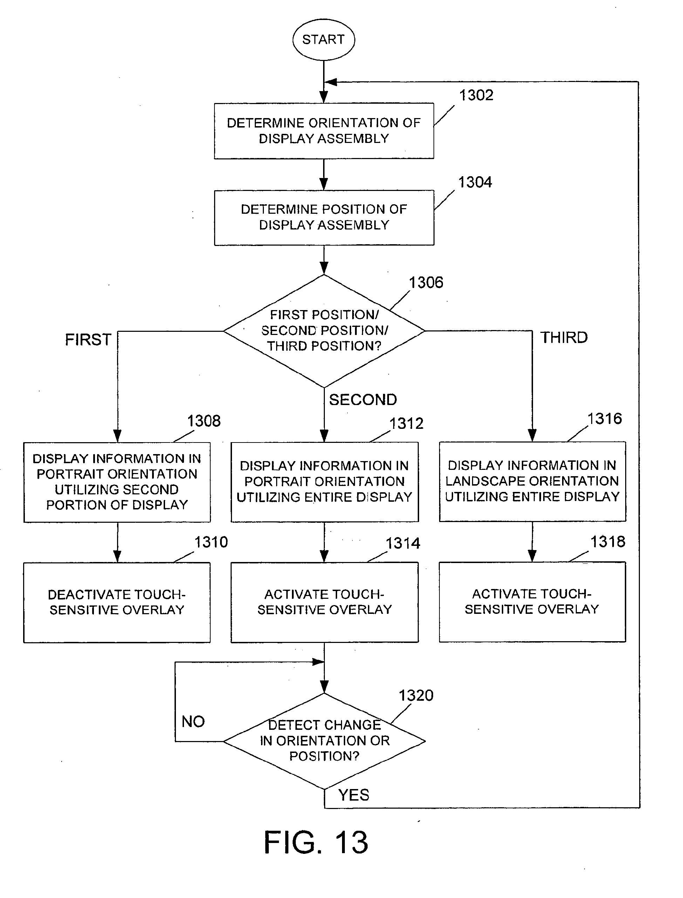

Referring to FIG. 13, a flow chart illustrating a method of controlling the handheld electronic communication device 100 is shown. The method may be carried out by software executed, for example, by the processor 102. Coding of software for carrying out such a method is within the scope of a person of ordinary skill in the art given the present description. The method may contain additional or fewer processes than shown and/or described, and may be performed in a different order

The method starts when the handheld electronic communication device 100 is turned on or in the awake state and the orientation of the display assembly 206 is determined 1302. The orientation may be determined utilizing the accelerometer 136 or may be determined utilizing any other suitable device. Rather than determining orientation based on the accelerometer 136, the orientation of the display assembly 206 relative to the back 212 may be determined. The position of the display assembly 206 is determined at 1304. In this example, determination of the position of the display assembly and the orientation are shown as separate processes. The position and the relative orientation may be determined in a single process, however. When the display assembly 206 is in the first position at 1306, information is displayed 1308 on the portion of the display 112 that is exposed and touch-sensing is inoperable 1310. When the display assembly 206 is in the second position at 1306, the information is displayed 1312 in the portrait orientation, utilizing the entire display 112 and the touch-sensing 112 utilizing the touch-sensitive display 118 is operable 1314. When the display assembly 206 is in the third position at 1306, the entire display is utilized for displaying 1316 information in the landscape orientation, and the touch-sensing is operable 1318. When a change in the orientation or position of the display 112 is detected at 1320, the process continues at 1302.

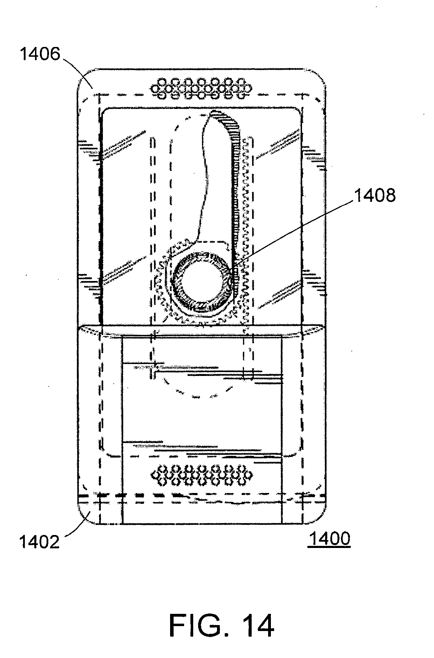

Reference is now made to FIG. 14 to describe an alternative embodiment of the handheld electronic communication device. The handheld electronic communication device 1400 is similar to the handheld electronic communication device 100 described above and therefore the features of the device are not described again herein. In the present example, however, the handheld electronic communication device 1400 includes a coil spring 1408 cooperating between the display assembly 1406 and the body 1402 to bias the display assembly 1406 into the second position, for example. The coil spring 1408 is fixed, at one end, to the display assembly 1406 and, at the other end, to the body 1402 such that the coil spring 1408 is coiled between a back of the display and a back of the pinion when the handheld electronic communication device 1400 is in the second position and extends when the display assembly is moved out of the second position, toward the third position The display assembly 1406 is biased by the coil spring 1408 such that movement out of the first position to the third position and movement from the third position to the second position is facilitated by the coil spring 1408.

Optionally, the portion of the display 112 that is hidden when the handheld electronic communication device 100 is in use with the display assembly 206 in the first position, may be turned off or may be utilized to display a color that consumes less power to save battery power.

In the embodiments shown and described herein, the input device is exposed for use in each position of the display assembly. Alternatively, the input device may be concealed behind the display assembly when the display assembly is in the first position and exposed when the display assembly is in the second and third positions. The input device may be disposed behind the display assembly and may be exposed for use when the display assembly is moved from the first position into the second position. The input device may be biased to move outwardly when the display assembly is moved from the first position into the second position such that the input device is generally flush with the display screen when the display assembly is in the second or the third positions.

The handheld electronic communication device 100 described herein includes multiple positions of the display assembly relative to the body. Thus, the display assembly is moveable relative to the body to provide different device forms, commonly referred to as form factors. The positions provide a display with a keyboard, an extended portrait orientation display with the keyboard and a landscape view of the display with the keyboard. Thus, the handheld electronic communication device may be stored or utilized in a compact position and the screen may be fully exposed for viewing more information at one time while still providing a keyboard or other input device. Further, the orientation of the display can be selected based on the type of information displayed.

While the embodiments described herein are directed to particular implementations of the actuating assembly and the handheld electronic communication device and the, it will be understood that modifications and variations may occur to those skilled in the art. All such modifications and variations are believed to be within the sphere and scope of the present disclosure.

## Claims

1. A handheld electronic communication device (100) comprising:
a body (202) comprising an input device (204);
a display assembly (206) comprising a display (112), the display assembly (206) connected to the body (202) by a rack and pinion mechanism, and rotatable relative to the body (202) between a first position in which a first portion of the display (112) is covered by the body (202) and a second portion of the display (112) extends from the body (202), and a second position in which the display (112) is displaced generally linearly relative to the first position such that the first portion and the second portion of the display (112) are exposed.

2. The handheld electronic communication device (100) according to claim 1, wherein the display assembly (206) is rotatable from the first position to a third position in which the display is generally transverse to an orientation of the display (112) in the second position.

3. The handheld electronic communication device (100) according to claim 2, wherein the third position is intermediate the first position and the second position.

4. The handheld electronic communication device (100) according to claim 2, wherein the display (112) is in a portrait orientation when the display assembly (206) is in the second position and is in a landscape orientation in the third position.

5. The handheld electronic communication device (100) according to claim 4, wherein information rendered on the display (112) is rendered in a portrait orientation when the display assembly (206) is in the second position and information rendered on the display (112) is rendered in a landscape orientation when the display assembly (206) is in the third position.

6. The handheld electronic communication device (100) according to claim 5, comprising an accelerometer (136) disposed in the display assembly (206) to determine in which of the landscape orientation and the portrait orientation to render the information.

7. The handheld electronic communication device (100) according to any of claims 1 to 6, wherein information rendered on the display (112) is rendered on the second portion of the display (112) when the display assembly (206) is in the first position.

8. The handheld electronic communication device (100) according to any of claims 2 to 7, wherein the first portion and the second portion of the display (112) are exposed when the display assembly (206) is in the third position.

9. The handheld electronic communication device (100) according to any of claims 1 to 8, wherein the display (112) comprises a touch-sensitive display (118).

10. The handheld electronic communication device (100) according to claim 9, wherein, when the display assembly (206) is in the second position, the touch-sensitive display (118) is operable to detect a touch thereon.

11. The handheld electronic communication device (100) according to claim 10, wherein, when the display assembly (206) is in the first position, the touch-sensitive display (118) is inoperable to detect a touch thereon.

12. The handheld electronic communication device (100) according to any of claims 1 to 11, wherein the display assembly (206) comprises the pinion (710) and the body (202) comprises the rack (602).

13. The handheld electronic communication device (100) according to any of claims 1 to 12, wherein the input device (204) comprises at least one of a keyboard, a keypad, a trackpad, and a touch-sensitive display.

14. The handheld electronic communication device (100) according to any of claims 1 to 13, wherein the input device (204) comprises a keyboard and the keyboard covers the first portion of the display (112) when the display assembly (206) is in the first position.

15. A method of controlling a handheld electronic communication device (100), the handheld electronic communication device (100) comprising a body (202) comprising an input device (204), and a display assembly (206) comprising a touch-sensitive display (118), the display assembly (206) connected to the body by a rack and pinion mechanism, and rotatable relative to the body (202), between a first position in which a first portion of the touch-sensitive display (118) is covered by the body (202) and a second portion of the touch-sensitive display (118) extends from the body (202), and a second position in which the touch-sensitive display (118) is displaced generally linearly relative to the first position such that the first portion and the second portion of the touch-sensitive display (118) are exposed, the method comprising:
activating touch-sensing utilizing the touch-sensitive display (118) to detect a touch thereon when the display assembly (206) is moved from the first position to the second position; and
deactivating the touch-sensing when the display assembly (206) is moved from the second position to the first position.

16. The method according to claim 15, wherein the display assembly of the handheld electronic communication device (100) is rotatable between from the first position to a third position in which the touch-sensitive display (118) is generally transverse to an orientation of the touch-sensitive display (118) in the second position, and the method comprises:
determining the orientation of the touch-sensitive display (118); and
rendering information on the touch-sensitive display (118) based on the position of the touch-sensitive display (118).

17. The method according to claim 16, wherein the third position is intermediate the first position and the second position.

18. The method according to claim 16 or 17, wherein rendering comprises rendering the information in a portrait orientation when the display assembly (206) is in the second position and rendering the information in a landscape orientation when the display assembly (206) is in the third position.

19. The method according to claim 16 or 17 or 18, wherein rendering comprises rendering information on only the second portion of the touch-sensitive display (118) when the display assembly (206) is in the first position.

## Patentansprüche

1. Eine handgehaltene elektronische Kommunikationsvorrichtung (100), die aufweist:
einen Körper (202) mit einer Eingabevorrichtung (204);
eine Anzeigebaugruppe (206), die eine Anzeige (112) aufweist, wobei die Anzeigebaugruppe (206) mit dem Körper (202) durch einen Zahnstangenmechanismus verbunden ist und relativ zu dem Körper (202) rotierbar ist zwischen einer ersten Position, in der ein erster Teil der Anzeige (112) durch den Körper (202) abgedeckt ist und sich ein zweiter Teil der Anzeige (112) von dem Körper (202) erstreckt, und einer zweiten Position, in der die Anzeige (112) im Allgemeinen linear relativ zu der ersten Position versetzt ist derart, dass der erste Teil und der zweite Teil der Anzeige (112) freigelegt sind.

2. Die handgehaltene elektronische Kommunikationsvorrichtung (100) gemäß Anspruch 1, wobei die Anzeigebaugruppe (206) von der ersten Position in eine dritte Position rotierbar ist, in der die Anzeige im Allgemeinen quer zu einer Ausrichtung der Anzeige (112) in der zweiten Position ist.

3. Die handgehaltene elektronische Kommunikationsvorrichtung (100) gemäß Anspruch 2, wobei die dritte Position zwischen der ersten Position und der zweiten Position ist.

4. Die handgehaltene elektronische Kommunikationsvorrichtung (100) gemäß Anspruch 2, wobei die Anzeige (112) in einer Hochformat-Ausrichtung ist, wenn die Anzeigebaugruppe (206) in der zweiten Position ist, und in einer Querformat-Ausrichtung in der dritten Position ist.

5. Die handgehaltene elektronische Kommunikationsvorrichtung (100) gemäß Anspruch 4, wobei Information, die auf der Anzeige (112) dargestellt wird, in einer Hochformat-Ausrichtung dargestellt wird, wenn die Anzeigebaugruppe (206) in der zweiten Position ist, und Information, die auf der Anzeige (112) dargestellt wird, in einer Querformat-Ausrichtung dargestellt wird, wenn die Anzeigebaugruppe (206) in der dritten Position ist.

6. Die handgehaltene elektronische Kommunikationsvorrichtung (100) gemäß Anspruch 5, die einen Beschleunigungsmesser (136) aufweist, der in der Anzeigebaugruppe (206) angeordnet ist, um zu bestimmen, in welcher der Querformat-Ausrichtung und der Hochformat-Ausrichtung die Information darzustellen ist.

7. Die handgehaltene elektronische Kommunikationsvorrichtung (100) gemäß einem der Ansprüche 1 bis 6, wobei Information, die auf der Anzeige (112) dargestellt wird, auf dem zweiten Teil der Anzeige (112) dargestellt wird, wenn die Anzeigebaugruppe (206) in der ersten Position ist.

8. Die handgehaltene elektronische Kommunikationsvorrichtung (100) gemäß einem der Ansprüche 2 bis 7, wobei der erste Teil und der zweite Teil der Anzeige (112) freigelegt sind, wenn die Anzeigebaugruppe (206) in der dritten Position ist.

9. Die handgehaltene elektronische Kommunikationsvorrichtung (100) gemäß einem der Ansprüche 1 bis 8, wobei die Anzeige (112) eine berührungsempfindliche Anzeige (118) aufweist.

10. Die handgehaltene elektronische Kommunikationsvorrichtung (100) gemäß Anspruch 9, wobei, wenn die Anzeigebaugruppe (206) in der zweiten Position ist, die berührungsempfindliche Anzeige (118) betriebsfähig ist, eine Berührung darauf zu erfassen.

11. Die handgehaltene elektronische Kommunikationsvorrichtung (100) gemäß Anspruch 10, wobei, wenn die Anzeigebaugruppe (206) in der ersten Position ist, die berührungsempfindliche Anzeige (118) nicht betriebsfähig ist, eine Berührung darauf zu erfassen.

12. Die handgehaltene elektronische Kommunikationsvorrichtung (100) gemäß einem der Ansprüche 1 bis 11, wobei die Anzeigebaugruppe (206) das Zahnrad (710) aufweist und der Körper (202) die Zahnstange (602) aufweist.

13. Die handgehaltene elektronische Kommunikationsvorrichtung (100) gemäß einem der Ansprüche 1 bis 12, wobei die Eingabevorrichtung (204) zumindest eines aus einer Tastatur, einem Tastenfeld, einem Trackpad und einer berührungsempfindlichen Anzeige aufweist.

14. Die handgehaltene elektronische Kommunikationsvorrichtung (100) gemäß einem der Ansprüche 1 bis 13, wobei die Eingabevorrichtung (204) eine Tastatur aufweist und die Tastatur den ersten Teil der Anzeige (112) abdeckt, wenn die Anzeigebaugruppe (206) in der erste Position ist.

15. Ein Verfahren zum Steuern einer handgehaltenen elektronischen Kommunikationsvorrichtung (100), wobei die handgehaltene elektronische Kommunikationsvorrichtung (100) einen Körper (202) aufweist, der eine Eingabevorrichtung (204) aufweist, und eine Anzeigebaugruppe (206), die eine berührungsempfindliche Anzeige (118) aufweist, wobei die Anzeigebaugruppe (206) mit dem Körper durch einen Zahnstangenmechanismus verbunden ist und relativ zu dem Körper (202) rotierbar ist zwischen einer ersten Position, in der ein erster Teil der berührungsempfindlichen Anzeige (118) durch den Körper (202) abgedeckt ist und sich ein zweiter Teil der berührungsempfindlichen Anzeige (118) von dem Körper (202) erstreckt, und einer zweiten Position, in der die berührungsempfindliche Anzeige (118) im Allgemeinen linear relativ zu der ersten Position versetzt ist derart, dass der erste Teil und der zweite Teil der berührungsempfindlichen Anzeige (118) freigelegt sind, wobei das Verfahren aufweist:
Aktivieren einer Berührungserfassung unter Verwendung der berührungsempfindlichen Anzeige (118), um eine Berührung darauf zu erfassen, wenn die Anzeigebaugruppe (206) von der ersten Position in die zweite Position bewegt wird; und
Deaktivieren der Berührungserfassung, wenn die Anzeigebaugruppe (206) von der zweiten Position in die erste Position bewegt wird.

16. Das Verfahren gemäß Anspruch 15, wobei die Anzeigebaugruppe der handgehaltenen elektronischen Kommunikationsvorrichtung (100) rotierbar ist von der ersten Position in eine dritte Position, in der die berührungsempfindliche Anzeige (118) im Allgemeinen quer zu einer Ausrichtung der berührungsempfindliche Anzeige (118) in der zweiten Position ist, und das Verfahren aufweist:
Bestimmen der Ausrichtung der berührungsempfindlichen Anzeige (118); und
Darstellen von Information auf der berührungsempfindlichen Anzeige (118) basierend auf der Position der berührungsempfindlichen Anzeige (118).

17. Das Verfahren gemäß Anspruch 16, wobei die dritte Position zwischen der ersten Position und der zweiten Position ist.

18. Das Verfahren gemäß Anspruch 16 oder 17, wobei das Darstellen aufweist ein Darstellen der Information in einer Hochformat-Ausrichtung, wenn die Anzeigebaugruppe (206) in der zweiten Position ist, und Darstellen der Information in einer Querformat-Ausrichtung, wenn die Anzeigebaugruppe (206) in der dritten Position ist.

19. Das Verfahren gemäß Anspruch 16 oder 17 oder 18, wobei das Darstellen aufweist ein Darstellen von Information nur auf dem zweiten Teil der berührungsempfindlichen Anzeige (118), wenn die Anzeigebaugruppe (206) in der ersten Position ist.

## Revendications

1. Dispositif de communication électronique portable (100) comprenant :
un corps (202) comprenant un dispositif d'entrée (204) ;
un ensemble d'affichage (206) comprenant un afficheur (112), l'ensemble d'affichage (206) étant relié au corps (202) par un mécanisme à pignon et crémaillère, et pouvant tourner par rapport au corps (202) entre une première position, dans laquelle une première partie de l'afficheur (112) est recouverte par le corps (202) et une deuxième partie de l'afficheur (112) s'étend du corps (202), et une deuxième position, dans laquelle l'afficheur (112) est déplacé généralement linéairement par rapport à la première position de sorte que la première partie et la deuxième partie de l'afficheur (112) sont exposées.

2. Dispositif de communication électronique portable (100) selon la revendication 1, dans lequel l'ensemble d'affichage (206) peut tourner de la première position à une troisième position dans laquelle l'afficheur est généralement orienté transversalement à une orientation de l'afficheur (112) dans la deuxième position.

3. Dispositif de communication électronique portable (100) selon la revendication 2, dans lequel la troisième position est intermédiaire à la première position et à la deuxième position.

4. Dispositif de communication électronique portable (100) selon la revendication 2, dans lequel l'afficheur (112) est dans une orientation de portrait lorsque l'ensemble d'affichage (206) est dans la deuxième position et est dans une orientation de paysage dans la troisième position.

5. Dispositif de communication électronique portable (100) selon la revendication 4, dans lequel les informations reproduites sur l'afficheur (112) sont reproduites dans une orientation de portrait lorsque l'ensemble d'affichage (206) est dans la deuxième position et les informations reproduites sur l'afficheur (112) sont reproduites dans une orientation de paysage lorsque l'ensemble d'affichage (206) est dans la troisième position.

6. Dispositif de communication électronique portable (100) selon la revendication 5, comprenant un accéléromètre (136) disposé dans l'ensemble d'affichage (206) pour déterminer dans laquelle de l'orientation de paysage et de l'orientation de portrait il convient de reproduire les informations.

7. Dispositif de communication électronique portable (100) selon l'une quelconque des revendications 1 à 6, dans lequel les informations reproduites sur l'afficheur (112) sont reproduites sur la deuxième partie de l'afficheur (112) lorsque l'ensemble d'affichage (206) est dans la première position.

8. Dispositif de communication électronique portable (100) selon l'une quelconque des revendications 2 à 7, dans lequel la première partie et la deuxième partie de l'afficheur (112) sont exposées lorsque l'ensemble d'affichage (206) est dans la troisième position.

9. Dispositif de communication électronique portable (100) selon l'une quelconque des revendications 1 à 8, dans lequel l'afficheur (112) comprend un afficheur tactile (118).

10. Dispositif de communication électronique portable (100) selon la revendication 9, dans lequel, lorsque l'ensemble d'affichage (206) est dans la deuxième position, l'afficheur tactile (118) a pour fonction de détecter un contact sur celui-ci.

11. Dispositif de communication électronique portable (100) selon la revendication 10, dans lequel, lorsque l'ensemble d'affichage (206) est dans la première position, l'afficheur tactile (118) ne peut pas être mis en oeuvre pour détecter un contact sur celui-ci.

12. Dispositif de communication électronique portable (100) selon l'une quelconque des revendications 1 à 11, dans lequel l'ensemble d'affichage (206) comprend le pignon (710) et le corps (202) comprend la crémaillère (602).

13. Dispositif de communication électronique portable (100) selon l'une quelconque des revendications 1 à 12, dans lequel le dispositif d'entrée (204) comprend au moins l'un d'un clavier, d'un pavé numérique, d'un pointeur tactile et d'un afficheur tactile.

14. Dispositif de communication électronique portable (100) selon l'une quelconque des revendications 1 à 13, dans lequel le dispositif d'entrée (204) comprend un clavier et le clavier recouvre la première partie de l'afficheur (112) lorsque l'ensemble d'affichage (206) est dans la première position.

15. Procédé de commande d'un dispositif de communication électronique portable (100), le dispositif de communication électronique portable (100) comprenant un corps (202) comprenant un dispositif d'entrée (204), et un ensemble d'affichage (206) comprenant un afficheur tactile (118), l'ensemble d'affichage (206) étant relié au corps par un mécanisme à pignon et crémaillère, et pouvant tourner par rapport au corps (202) entre une première position, dans laquelle une première partie de l'afficheur tactile (118) est couverte par le corps (202) et une deuxième partie de l'afficheur tactile (118) s'étend du corps (202), et une deuxième position, dans laquelle l'afficheur tactile (118) est déplacé généralement linéairement par rapport à la première position de sorte que la première partie et la deuxième partie de l'afficheur tactile (118) sont exposées, le procédé comprenant :
l'activation d'une détection tactile en utilisant l'afficheur tactile (118) pour détecter un contact sur celui-ci lorsque l'ensemble d'affichage (206) est déplacé de la première position à la deuxième position ; et
la désactivation de la détection tactile lorsque l'ensemble d'affichage (206) est déplacé de la deuxième position à la première position.

16. Procédé selon la revendication 15, dans lequel l'ensemble d'affichage du dispositif de communication électronique portable (100) peut tourner de la première position à une troisième position dans laquelle l'afficheur tactile (118) est généralement orienté transversalement à une orientation de l'afficheur tactile (118) dans la deuxième position, et le procédé comprend :
la détermination de l'orientation de l'afficheur tactile (118) ; et
la reproduction des informations sur l'afficheur tactile (118) sur la base de la position de l'afficheur tactile (118).

17. Procédé selon la revendication 16, dans lequel la troisième position est intermédiaire à la première position et à la deuxième position.

18. Procédé selon la revendication 16 ou 17, dans lequel la reproduction comprend la reproduction des informations dans une orientation de portrait lorsque l'ensemble d'affichage (206) est dans la deuxième position et la reproduction des informations dans une orientation de paysage lorsque l'ensemble d'affichage (206) est dans la troisième position.

19. Procédé selon la revendication 16 ou 17 ou 18, dans lequel la reproduction comprend la reproduction des informations uniquement sur la deuxième partie de l'afficheur tactile (118) lorsque l'ensemble d'affichage (206) est dans la première position.
